# EUROPEAN PATENT APPLICATION

(11) **EP 2 198 720 A2**
(43) Date of publication of application: **23.06.2010**
(21) Application number: 09180232.2
(22) Date of filing: 21.12.2009
(51) Int. Cl.: A23C 19/05

(54) **Method for improving the texture of natural cheese**

(30) Priority: 22.12.2008 NL 2002361
(71) Applicant: Friesland Brands B.V., 7943 PE Meppel (NL)
(72) Inventor: van Arem, Everhardus Jacobus Franciscus, 8802 CR Franeker (NL); Luyten, Johanna Maria Jozefa Georgina, 6706 AC Wageningen (NL); Nieuwenhuijse, Johannes Andries, 7211 AR Eefde (NL); van der Schaaf, André, 8502 BP Joure (NL)
(74) Representative: Hatzmann, Martin

(57) **Abstract**

Disclosed is a method of improving the texture of hard or semi-hard cheese, particularly of semi or low fat cheese. According to this method, a calcium phosphate material is added during cheese making. Preferably the calcium phosphate material is natural milk calcium. The resulting cheese has an improved softness and creaminess.

## Description

### Field of the Invention

The invention relates to a method for improving the texture of natural cheese of the hard or semi-hard type, particularly of low-fat or semi-fat cheese.

### Background to the Invention

Traditionally, cheese making involves a process wherein milk ingredients are concentrated in order to preserve the ingredients for long periods of time. Many types of cheese exist, each having its own specific production process. Generally, the basic steps in cheese making comprise: providing cheese milk; adding starter cultures; adding a coagulant (rennet type enzymes), coagulation of caseins by proteolytic actions of the coagulant, inducing the milk to form a gel (curd); cutting the curd and removing a large part of the water (whey) from the curd, thereby concentrating the caseins and the fat; addition of salt; and ripening.

Cheese manufacture procedures can be modified, for example, in order to produce cheese with enhanced nutritional properties. This includes producing cheese with reduced fat content (low-fat or semi-fat cheese) and cheese enriched with calcium.

Some cheeses, in particular low- or semi fat cheese, have an undesirable tough or stiff texture associated with a dense protein matrix.

It is desired to improve the texture of cheese, in particular of low-fat or semi-fat cheese, e.g. to make it more soft and creamy. This is especially relevant for low fat cheeses.

EP-A-1946647 provides a method to produce low fat cheese with improved structure by acidifying milk and adding calcium chelating agents such as citrates. WO-A-2008/131016 teaches a method of preparing low-fat cheese with improved texture by acidifying the milk and by adding mono- and diglycerides which act as surfactants and provide a creamy mouthfeel.

According to these methods, calcium is removed from milk and drained off with the whey. This results in reduced calcium content in cheese which is disadvantageous from a nutritional point of view.

EP-A2-1138207 teaches calcium fortified cheese obtained by addition of a mixture of calcium sulphate and tricalcium phosphate to shredded cheese with subsequent compacting of cheese. The cheese is claimed not to possess adverse sensorial characteristics usually associated with calcium sulphate (bitter taste) and tricalcium phosphate (gritty texture). It should be noted that for (low-fat) Gouda-type of cheese, however, a gritty texture is not the main problem. Particularly rubbery and firm are the relevant taste defects for such cheeses, and EP 1 138 207 does not seem to solve this issue.

Another reference on calcium-enriched full-fat cheeses is Mora-Gutierrez et al., International Dairy Journal, 17(3), 2006, 255-267. Milk calcium is prepared from the whey serum fraction of bovine milk. This involves a step in which the pH is lowered to 4.2, which is a standard procedure to precipitate casein and obtain casein whey. Before further use, the whey is neutralized to pH 6.8 again.

ES 2 039 185 concerns the use of calcium phosphate as a substitute for calcium chloride in cheesemaking. The reference indicates that this would affect the coagulation chemistry, leading to a shorter coagulation time, a higher yield, and stronger curd particles (which lead to a firmer texture).

Also in some old disclosures, calcium phosphate is added to cheese. See, e.g., DE 834 948 and DE 876 187. Herein hard-soluble calcium salts are added to counter the effects of milk poor in calcium content.

Other references in which calcium phosphate is used in cheesemaking particularly concern cottage cheese, e.g. US 3 792 171 and US 4 066 791. Cottage cheese is a different product, with different characteristics, outside the field of hard or semi-hard cheese.

US 6 558 717 pertains to the isolation of calcium phosphate and casein as separate products from a skim milk source. The skim milk source typically has a pH of 4.6-4.8. Thus, e.g., crystalline calcium phosphate is isolated.

None of the documents cited addresses the existing demand for a method to improve the texture of natural cheese, particularly low-fat or semi-fat cheese, without adversely affecting the calcium content of the cheese.

### Summary of the Invention

In order to better address the foregoing demand, the present invention, in one aspect, provides a method for improving the texture of a natural cheese of the hard or semi-hard type, comprising adding a calcium phosphate material to cheese milk, curdling the cheese milk, and making cheese, wherein the calcium phosphate material is obtainable by subjecting a calcium phosphate to an acidic pH for an at least equilibrating period of time. Advantageously, calcium, initially present in the cheese milk, remains in the curd after the whey separation step.

The invention, in another aspect, provides an ingredient suitable for use in cheese making, particularly in order to produce cheese having an improved texture, the ingredient comprising a calcium phosphate material obtainable by subjecting a calcium phosphate to a pH of from 1 to 4.5 for an at least equilibrating period of time.

The invention, in still another aspect, provides a method of making a hard or semi-hard cheese in which a calcium phosphate ingredient is put to use, said ingredient being obtainable by subjecting a calcium phosphate to an acidic pH for an at least equilibrating period of time.
In yet a further aspect, the invention provides a natural, hard or semi-hard cheese comprising predominantly acidic calcium phosphate particles, showing an additional peak at a pH of from 3.8-4.3 upon titration, with acid, of a mixture of cheese and water, particularly having a composition selected from the group consisting of brushite, monotite, octacalciumphosphate and mixtures thereof.

### Detailed Description of the Invention

The invention is concerned with improving the texture of hard or semi-hard cheese. The improvement refers to making the texture more organoleptically pleasant. This can be described as soft and creamy, malleable, supple or flexible, and which is different from firm, rubbery, grainy, gritty, usually seen as undesired for cheese texture. A reference to definitions of these and other sensory and mechanical properties of cheese is E.A. Foegeding and M.A. Drake, J. Dairy Sci. 90:1611-1624 (2007), pages 1611-1624.

Where cheese is mentioned in the context of the present invention, it is understood as any type of natural cheese. The invention specifically relates to hard and semi-hard types of cheese, and most preferably to semi-hard cheese. The term "semi-hard" cheese is known to the skilled person, and is generally understood as referring to cheese which is subjected to ripening for at least 4 weeks. Examples of semi-hard cheeses are Gouda, Edam, Maasdam. Reference is made to IDF bulletin 141 1981 ISSN 0250-5118.

The invention, although applicable to full fat cheese as well, in particular relates to semi fat, and preferably to low fat cheese. The term "semi fat" is intended herein to mean a natural cheese or processed cheese that contains less than 40 wt.% of fat based upon the total dry matter of the cheese. For low fat cheese this fat content is below 20%.

The calcium phosphate material according to the present invention generally can be any material comprising calcium ions, and phosphoroxide groups, such as orthophosphate ions.. Examples of such calcium phosphates are tricalcium phosphate, calcium monohydrogen phosphate, calcium dihydrogen phosphate, hydroxyapatite. A suitable calcium phosphate is described in US-6,007,852 which is used there for calcium enrichment of cheese.

Particularly, in the invention use is made of acidic or acidified calcium phosphate materials. Acidic calcium phosphate materials are typically calcium hydrophosphates and dihydrophosphates, i.e. CaHPO₄ and Ca₂(HPO4)₂. Acidified calcium phosphate materials are preferred, and can be characterized as obtainable by subjecting a calcium phosphate, e.g. a tricalcium phosphate, to an acidic pH. After such treatment, a significant part of any calcium phosphate material is converted into calcium monohydrophosphate; this material may be crystalline, but also partly amorphous. It will be understood that part of the calcium and phosphate are in solution at the low pH of the slurry.

In another preferred embodiment, the calcium phosphate material comprises natural milk calcium. Examples of such natural milk calcium which are available on the market are Vivinal MCA 26 ®, Capolac®, Lactoval HiCal®, TruCal®, Alamin®.

Most preferably, according to the present invention, the calcium phosphate material is obtainable by subjecting natural milk calcium to an acidic pH. Preferably the acidic pH is below 6, more preferably within the range of from 1 to 5, more preferably 2 to 4.5, and most preferably 3 to 4.

The invention also pertains to an ingredient suitable for use in cheese making, particularly in order to produce cheese having an improved texture, the ingredient comprising a calcium phosphate material (and particularly natural milk calcium) obtainable by subjecting a calcium phosphate to an acidic pH for an at least equilibrating period of time as discussed hereinafter.

Subjecting calcium phosphates to an acidic pH can generally be conducted by mixing the calcium phosphate with an acid, or an acid solution. Suitable acids include hydrochloric acid, citric acid, acetic acid, and lactic acid. Hydrochloric acid is preferred. Required are food grade acids, including mixtures thereof.

It is further required to subject the calcium phosphate to the acidic pH for a sufficiently long period to to extensively convert the original form of the calcium phosphate into the form of calcium phosphate prevailing at the acidic pH. This is referred to as an at least equilibrating period of time, which preferably is at least one hour, and more preferably at least one day. It will be understood that, preferably, the subjection to the acidic pH and the setting of the equilibrium will involve stirring of an aqueous, acidic, liquid comprising the calcium phosphate.

More preferably, the calcium phosphate is subjected to the acidic pH by mixing an aqueous, acidic liquid with an aqueous suspension of the calcium phosphate. Herein, most preferably, the suspension is homogeneous, and the subjection to the acidic pH is conducted so as to maintain a homogeneous distribution of the calcium phosphate material. Preferably at least 10% by weight, and more preferably at least 25% by weight, of the calcium phosphate material is undissolved. The contents of undissolved calcium phosphate can be as high as 100%.

The calcium phosphate material can be introduced in different forms into the cheese milk. Preferably, it is introduced in the form of a suspension, more preferably, in the form of a suspension in a suitable aqueous liquid. Examples of such liquids are water, skim milk and whey. Under suspension it is understood a liquid-solid composition, in which solid particles are distributed mostly uniformly in a liquid phase. The particle size in the suspension preferably is not very large in order to maintain a uniform particle distribution and not to sediment too quickly. Preferred maximum particle sizes are below 100 µm, and more preferably below 50 µm. The suspension most preferably is in the form of a colloidal solution.

It is further preferred that the size of the crystalline material is at least 10 nm, preferably greater than 50 nm, in order to more adequately ensure that, during cheese making, the calcium does not flush away with the whey. The particle size values are determined by means of a Malvern laser particle size analyzer as well as size measurement on microscope photographs. Most preferably, the particles are very well, most preferably homogeneously distributed over the cheese.

The suspension of calcium phosphate is preferably mixed with the cheese milk, either before or after pasteurization thereof, and stirred in a way so as to achieve a uniform particle distribution in the cheese milk. It is preferable to stir the mixture for 1 to 72 hours, more preferably, for at least 48 hours, before it is mixed with cheese milk. Thereafter it is advisable to directly start coagulation. To the extent that it is desired to apply other additives during cheese making, such as antibacterial agents. these can be added in any conventional manner and any conventional point in time, and very conveniently they are added to the cheese milk together with the calcium phosphate material. Suitable additives are well known to those skilled in the art. Additives that are pH dependent, such as coloring additives, are not added together with the suspension. These can be included in the cheese milk, and distributed therein e.g. by stirring, before adding the suspension, or they can be added after the suspension has been added and distributed into the cheese milk.

The cheese milk with added calcium phosphate is then allowed to coagulate and the cheese making process proceeds after that in a conventional manner.

Because calcium phosphate is insoluble and inert, it will stay in the curd and, subsequently, in the cheese. Laboratory test results show that the calcium content of the cheese can be increased by e.g about 10-25% by weight.

It is known to the person skilled in the art that the normal absolute calcium content of the cheese can vary depending on for instant processing parameters and composition. A low fat cheese containing relative more protein results in a cheese with a higher calcium content by weight.

Without wishing to be bound by any theory, it is contemplated that the solid particles of calcium phosphate withdraw the calcium phosphate from the casein micelles which makes the texture of the cheese more flexible and hence more soft and creamy. The cheese according to the invention has an organoleptically pleasant, malleable texture which is confirmed by the test panel results.

The final step in the process of the invention, for improving the texture of cheese, is making cheese. How to make cheese after curdling is common general knowledge available to the person skilled in the art.

The invention also pertains to a method of making cheese in which a calcium phosphate ingredient is put to use, said ingredient being obtainable by subjecting a calcium phosphate to an acidic pH for an at least equilibrating period of time.

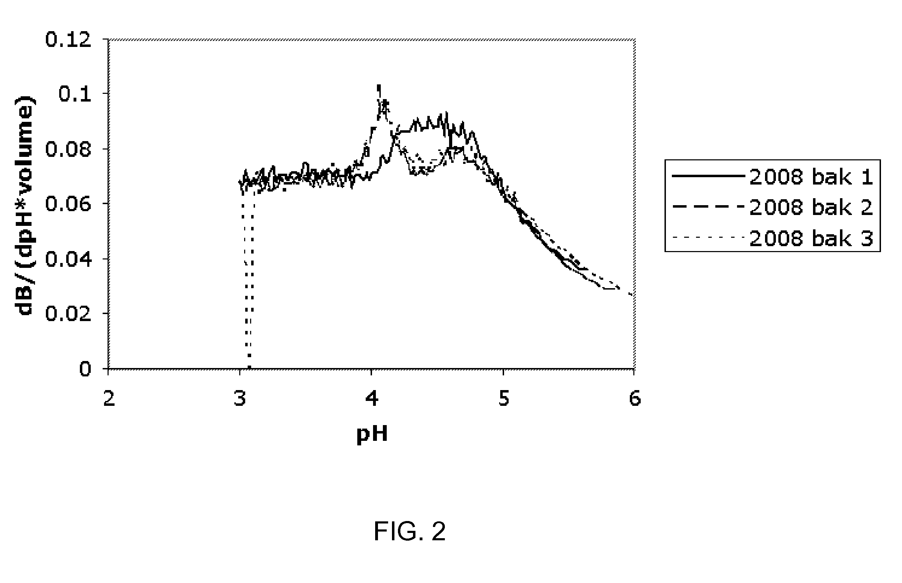

In yet a further aspect, the invention provides a cheese, particularly a semi-hard cheese, comprising predominantly acidic calcium phosphate particles. These predominantly acidic calcium phosphate particles are characterized by showing a peak in buffering capacity at about pH4 (pH3.8-4.3) upon titration, with acid, of a mixture of cheese and water having an onset of titration approximately equal to the pH of the cheese (e.g. pH6, but, as the skilled person knows, this may vary depending on the cheese). The latter is further explained with reference to Figure 2. Preferably the acidic calcium phosphate particles have a composition selected from the group consisting of brushite, monotite, octacalciumphosphate, and mixtures thereof.

The invention is hereinafter illustrated with reference to the following non-limiting figure and examples.

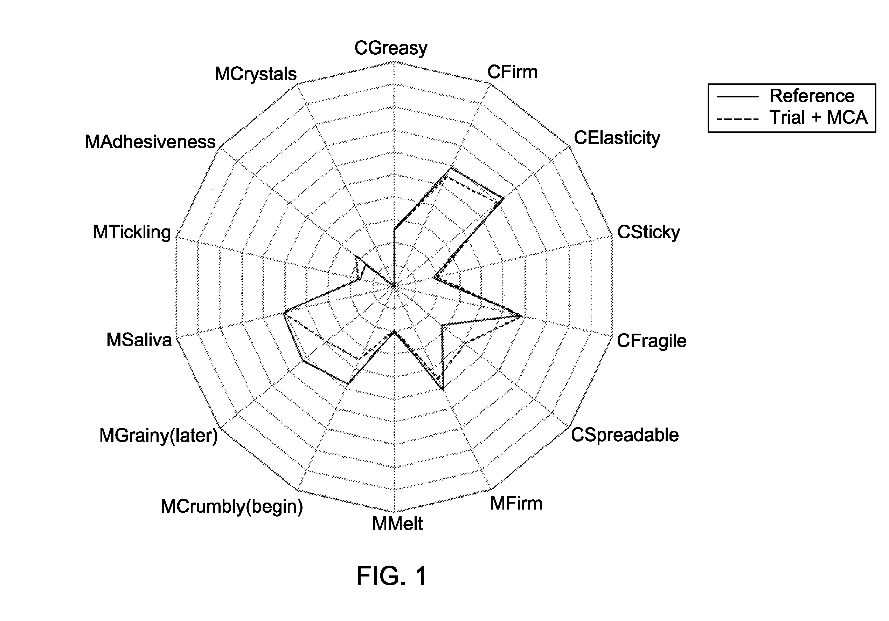

Figure 1 is a spider plot displaying sensorical characteristics as compiled by QDA (quantitative descriptive analysis) in a test before a sensory panel. Such sensory panel tests, and the conversion of the qualitative output thereof in a spider web plot, are known to the skilled person.

Figure 2 is a titration curve in which the buffer capacity (Y-axis) is plotted against pH (X-axis). The curve results from a titration experiment in which a cheese is mixed with water (in this example at pH6), followed by titration with acid. The curve shows a peak at approximately pH4 (pH 3.8-4.3) for the cheeses of the invention (comprising an added calcium phosphate material, in this case an acidified milk-based calcium phosphate material), "bak2"and "bak3", which peak is absent in a cheese outside of the invention (not containing an added calcium phosphate material), "bak 1." The peaks represent a change in the composition of the aqueous phase, by components from cheese, entering the aqueous phase. Thus, a peak in the cheese of the invention proves the existence of a component not present in a cheese not according to the invention, which must be attributed to the sole difference in manufacturing, viz. the addition of the calcium phosphate material.

### Example 1

Milk calcium from Vivinal MCA26® powder is used to prepare a suspension of calcium phosphate in water. The suspension is acidified with hydrochloric acid to bring the pH of the suspension to a value of 3.4. The suspension is stirred for 48h and then added to the cheese milk in a dosage of 0.12 kg Vivinal MCA26® per 100 litre of milk. In the suspension the weight ratio of dissolved to undissolved calcium phosphate material is about 1:1. At this step, the cheese milk is already pasteurized and contains customary additives such as calcium chloride, colouring agents and sodium nitrate are added. After homogenizing the mixture by stirring, rennet is added. The mixture is again stirred until homogenization and then curdling of the milk is allowed to start. The rest of the procedure is carried out in a standard for cheese manufacturing way. The sensory characteristics of the cheese are provided in Figure 1. The retaining of the calcium phosphate material is shown in Figure 2.

## Claims

1. A method for improving the texture of a natural cheese of the hard or semi-hard type, comprising adding a calcium phosphate material to cheese milk, curdling the cheese milk, and making cheese, wherein the calcium phosphate material is obtainable by subjecting a calcium phosphate to an acidic pH for an at least equilibrating period of time.

2. A method according to claim 1, comprising the step of subjecting the calcium phosphate to an acidic pH for an at least equilibrating period of time.

3. A method according to claim 1 or 2, wherein the cheese is a semi or low fat cheese.

4. A method according to any one of the preceding claims, wherein the calcium phosphate material is selected from the group consisting of tricalcium phosphate, natural milk calcium, and mixtures thereof.

5. A method according to any one of the preceding claims, wherein the pH is in the range of from 1 to 5, and preferably of from 3 to 4.

6. A method according to any one of the preceding claims, wherein the calcium phosphate material is in the form of a suspension.

7. A method according to claim 6, wherein the suspension comprises a liquid selected from the group consisting of water, skim milk, whey and mixtures thereof.

8. A method according to any one of the preceding claims, wherein the particle size of the calcium phosphate material is between 10 nm and 100 µm, preferably between 50 nm and 50 µm

9. An ingredient suitable for use in cheese making, particularly in order to produce natural cheese having an improved texture, the ingredient comprising a calcium phosphate material obtainable by subjecting a calcium phosphate to a pH of from 1 to 4.5, preferably of from 3 to 4, for an at least equilibrating period of time.

10. A method of making cheese comprising the steps of providing cheese milk, adding starter cultures, adding a coagulant, allowing the cheese milk to coagulate, and removing whey, wherein prior to coagulation an ingredient according to claim 9 is added to the cheese milk.

11. A natural, hard or semi-hard cheese comprising predominantly acidic calcium phosphate particles, showing an additional peak at a pH of from 3.8-4.3 upon titration, with acid, of a mixture of cheese and water, particularly having a composition selected from the group consisting of brushite, monotite, octacalciumphosphate and mixtures thereof.
